# EUROPEAN PATENT APPLICATION

(11) **EP 3 096 062 A1**
(43) Date of publication of application: **23.11.2016**
(21) Application number: 16170484.6
(22) Date of filing: 19.05.2016
(51) Int. Cl.: F16L 27/107

(54) **A PARTICULATE MATERIAL TRANSFER ASSEMBLY**

(30) Priority: 19.05.2015 GB 201508578
(71) Applicant: Process Link Limited, Shipston on Stour, Warwickshire CV36 4QZ (GB)
(72) Inventor: Snape, George, William, Shipston-on-Stour, Warwickshire CV36 4QZ (GB)
(74) Representative: McWilliams, David John

(57) **Abstract**

A particulate material transfer assembly (10) including a discharge tube (24), a receiving tube (28) and a flexible coupling (30). The flexible coupling (30) having upper (52) and lower (54) end parts provided between the discharge tube (24) and the receiving tube (28), and a connection system (32). The connection system (32) includes a first connection mount (34) located proximate an outlet of the discharge tube (24) and a releasable fastener (36) secured to the first connection mount (34). The releasable fastener (36) configured to, in use, surround the upper end of the flexible coupling (30) when fitted over the discharge tube (24) to releasably secure the upper end of the flexible coupling (30) to the discharge tube (24).

## Description

### FIELD OF THE INVENTION

The present invention relates to a particulate material transfer assembly suitable for the transfer of particulate materials from one process or container to another. The present invention also relates to a connection system for a particulate material transfer assembly, and a flexible coupling for a particulate material transfer assembly.

### BACKGROUND OF THE INVENTION

One of the main aims of any particulate material processing plant is to achieve 100% dust containment due to health and safety regulations. Dust containment in a particulate material processing plant can also have the added benefit of reducing product wastage.

Typically, in a processing plant, a flexible connection in the form of a cylindrical, oval, square or rectangular tube is affixed between the initial process or storage container and a second process or container to improve dust containment and hence reduce material loss during transfer of material between the containers. Flexible connections are often one of the least considered items in a material transfer processing plant. However, faulty or damaged flexible connections are one of the biggest causes of dust hazards in processing plants, and this can result in large amounts of product loss. Therefore, improving the quality of the seal of the flexible connection between containers can reduce the loss of material and thus the overall cost of the process.

Flexible connections are typically connected to an outlet of a first container and an inlet of a second container using a hose clamp to produce a seal therebetween. When a different material is to be transferred, the flexible connection may need to be changed to prevent cross contamination. Additionally, if/when the flexible connection needs to be cleaned (i.e. to remove any trapped material) it has to be removed from the assembly.

Due to the use of hose clamps, the removal and re-attachment of the flexible connection can be quite cumbersome and require considerable time, resulting in large amounts of 'down-time' for the processing system. Furthermore, when the hose clamps are removed they are often misplaced or damaged resulting in wasted time and increased costs of the overall system. Furthermore, while the flexible connections are removed from the assembly, they are more susceptible to becoming damaged, which can result in diminished dust containment.

The present invention seeks to overcome or at least mitigate the problems of the prior art.

### SUMMARY OF THE INVENTION

A first aspect of the invention provides a particulate material transfer assembly comprising a discharge tube, a receiving tube: a flexible coupling provided between the discharge tube and the receiving tube; the flexible coupling comprising an upper end part for communication with the discharge tube and a lower end part for communication with the receiving tube; and a connection system, the connection system comprising a first connector mount located proximate an outlet of the discharge tube; and a releasable fastener secured to the first connector mount and configured to, in use, surround or extend around a perimeter of the upper end part of the flexible coupling when the upper end part of the flexible coupling is attached to the outlet of the discharge tube to releasably secure the flexible coupling to the discharge tube.

Advantageously, this provides a particulate material transfer assembly which includes a releasable fastener proximate to the outlet of the discharge tube that does not need to be continually attached and detached from the assembly for every changeover thus improving the throughput of the overall assembly. This also ensures that the releasable fastener does not get lost during changeovers.

In one embodiment, the first connector mount is secured to the discharge tube.

Advantageously, this provides an easy and convenient location for securing the releasable fastener.

In one embodiment, the first connector mount is permanently secured to the discharge tube, optionally it is welded to the discharge tube.

Advantageously, this arrangement ensures that the releasable connection is not accidentally removed/lost during changeover.

In one embodiment, the first connector mount is releasably secured to the discharge tube, optionally via a worm drive clamp.

Advantageously, this arrangement ensures that the releasable connection is not accidentally removed/lost during changeover but enables the releasable connection to be removed if a replacement is needed, for example due to damage.

In one embodiment, the connector mount is a slideable mount.

Advantageously, this allows the releasable connection to be moved away from the discharge tube and flexible coupling during changeover enabling the operator better access to the flexible coupling, thus improving the ease and speed of the changeover process.

In one embodiment, the connector mount is a telescopic mount.

In one embodiment, the slideable mount or telescopic mount comprises a detent arrangement at a first and/or second end thereof.

Advantageously, this arrangement prevents the releasable connection from sliding away from the discharge tube and flexible coupling during attachment.

In one embodiment, the releasable fastener is pivotally secured to the connector mount.

Advantageously, this allows the reliable connection to be moved away from the discharge tube and flexible coupling during changeover enabling the operator better access to the flexible coupling, thus improving the ease and speed of the changeover process.

In one embodiment, the releasable fastener is an over centre clamp.

Advantageously, this provides a quick and easy to use releasable connection means that is not dependent on the strength of the operator.

In one embodiment, the flexible coupling comprises a central part or region of flexible material, optionally polyurethane, extending between the upper and lower end parts.

Advantageously, the flexible material enables the flexible coupling to compensate for any movement of the discharge tube and/or receiving tube.

In one embodiment, the upper and lower end parts comprise an elastic material, optionally latex.

Advantageously, the elastic material provides a snug fit (or a close-fit) over the discharge tube and/or receiving tube.

In one embodiment, the upper and lower end parts each comprise a reinforced ring at distal ends of the flexible coupling, e.g. proximate the upper and lower ends of the flexible coupling.

Advantageously, the reinforced rings enables the flexible coupling to keep its shape at its distal ends, which aids in placement and attachment of the flexible coupling.

In one embodiment, the reinforced ring is formed from a rigid material.

In one embodiment, the reinforced ring comprises a steel ring.

Advantageously, steel is a strong material that will not bend and so will maintain the shape of the flexible coupling.

In one embodiment, the inner diameter of the reinforced rings is larger than the outer diameter of the discharge tube and/or receiving tube to produce a flare in the flexible connection.

Advantageously, this flare, however slight, makes it easier for the flexible coupling to fit over the discharge tube and/or receiving tube. This makes it quick and easy for an operator to connect/disconnect the flexible connection, especially in confined spaces.

In one embodiment, the reinforced ring projects radially outward from an outer surface of upper and lower end parts of the flexible coupling.

Advantageously, this projection provides a surface which can abut against the releasable fastener to secure the flexible coupling to the tubes. This arrangement may also aid in placement of the flexible coupling by providing a wider opening.

In one embodiment, the upper and lower end parts are configured to have a smaller width than the discharge tube and/or receiving tube.

Advantageously, this provides a better snug fit around the tubes.

In one embodiment, the elastic material of the upper end part and/or the lower end part are configured to have a smaller diameter than the diameter of the discharge tube and/or receiving tube, respectively.

Advantageously, this provides a better snug fit around the tubes.

In one embodiment, the flexible coupling is tapered towards it lower end.

Advantageously, this aids in the transfer of material form the discharge tube to the receiving tube.

In one embodiment, the flexible coupling further comprises a flexible skirt extending below the lower extent of the lower end part configured to, in use, fold over and into the receiving tube. A first end of the flexible skirt is attached to the lower end part of the flexible coupling, optionally at the lower distal end of the flexible coupling.

Advantageously, this provides a further seal between the flexible coupling and the receiving tube. A gap region is formed between the side wall of the flexible coupling and the flexible skirt and as material falls into this region pressure is exerted on the receiving tube via the flexible skirt, which improves the seal at the lower end. This arrangement can remove the need for a releasable connection at the lower end of the flexible coupling.

In one embodiment, the flexible skirt is tapered towards it lower end.

Advantageously, this aids in the transfer of material form the discharge tube to the receiving tube.

In one embodiment, the assembly further comprises a second connector mount proximate an inlet of the receiving tube, and a releasable fastener secured to the second connector mount, configured to, in use, surround or extend around the outer perimeter of the lower end part of the flexible coupling when the lower end part of the flexible coupling is attached to the receiving tube to releasably secure the lower end of the flexible coupling to the receiving tube.

Advantageously, this provides a releasable seal at the bottom end of the flexible coupling for applications where an axial (or outward) pressure applied on the central part of the flexible coupling may normally lift the lower end of the flexible coupling from the receiving tube.

A second aspect of the invention provides a connection system for a particulate material transfer assembly comprising: a first ring fastener configured to be secured to an outlet of a particulate material transfer assembly; a releasable fastener in the form of an elongate member with a releasable clasp, the releasable fastener configured to extend around a perimeter of an outlet of a particulate material transfer assembly; a connection member connected to the first ring fastener and comprising a slideable connection mount, wherein the releasable fastener is parallel to and offset from the first ring fastener and is slideably secured to the connection mount.

A third aspect of the invention provides a flexible coupling for a particulate material transfer assembly comprising: an upper end part for communication with an outlet of a particulate material transfer assembly; a lower end part for communication with an inlet of a particulate material transfer assembly; a central part extending between the upper and lower end parts; reinforced rings located at distal ends of the upper and lower end parts; and a flexible skirt extending below a lowermost extent of the lower end part, and configured, in use, to fold over and into an inlet of a particulate material transfer assembly.

### BRIEF DESCRIPTION OF THE DRAWINGS

Embodiments of the invention will now be described with reference to the accompanying drawings, in which:
Figure 1 is a schematic view of a particulate material transfer assembly including a flexible coupling and connection system according to an embodiment of the invention;
Figure 2 is an enlarged isometric view of the connection system of Figure 1;
Figure 3 is a schematic side view of the connection system of Figure 1;
Figure 4 is a plan view of the connection system of Figure 1;
Figure 5 is an isometric view of a connection system according to an embodiment of the invention;
Figure 6 is an isometric view of a connection system according to an embodiment of the invention; and
Figure 7 is a side view of a flexible coupling according to an embodiment of the invention.

### DETAILED DESCRIPTION OF EMBODIMENT(S)

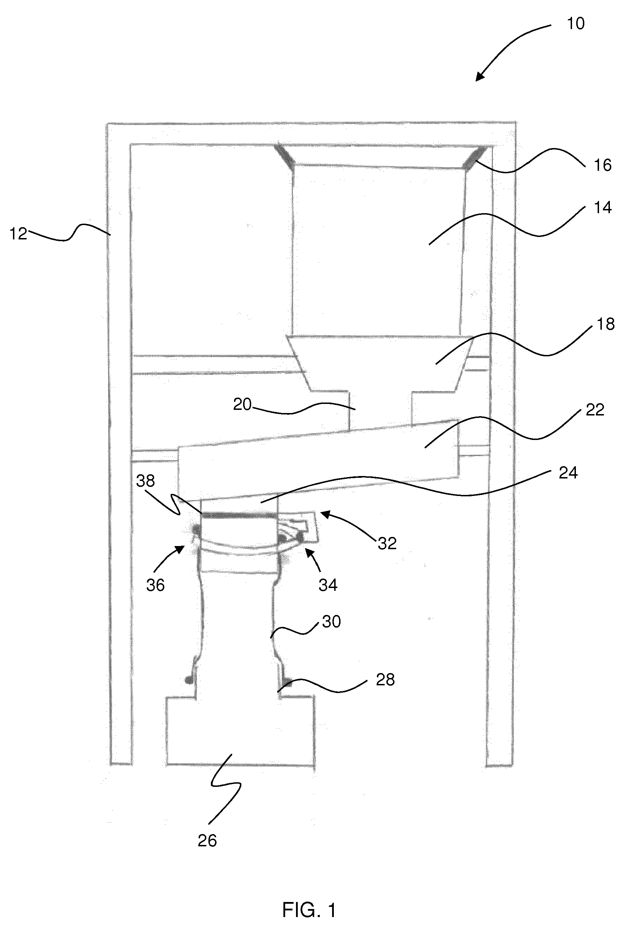

Referring firstly to Figure 1, an exemplary particulate material transfer assembly 10 according to a first embodiment is schematically illustrated. The transfer assembly 10 has an outer frame 12 from which a container 14 is suspended via supports 16 from upper portion thereof. The container 14 may be a flexible intermediate bulk container (FIBC) or any other suitable bulk container. The container 14 is also supported at its base by a support 18 having an outlet 20. In the illustrated embodiment, the support 18 is in the form of a discharge apparatus that is substantially trapezoid in cross section in order to aid material discharge. In alternate embodiments, the support 18 may not be present.

Material from the container 14 flows through the outlet 20 of the support 18 and into a feeder tray 22. In embodiments where the support is not present, material from the container 14 flows from an outlet of the container directly into the feeder tray 22. The tray 22 is an elongate angled tray that transfers the material along its length towards its discharge tube 24. In some embodiments, the feeder tray 22 may be a vibratory feeder tray. Alternatively, the feeder tray 22 may not be present and the discharge tube 24 may define the outlet 20 of the support 18. The discharge tube 24 is in the form of a cylindrical tube that extends substantially vertically from the underside of the feeder tray 22 and is typically made from a rigid material, such as a metal (e.g. steel). In alternative embodiments, the discharge tube may be formed from a plastics material.

The transfer assembly 10 is further provided with a receptacle 26 having a receiving tube 28 extending substantially upwards from its upper surface. The receiving tube 28 is positioned lower than the discharge tube 24 of the feeder tray 22 and a flexible coupling 30, also known as a flexible connection, is provided. The flexible coupling 30 is substantially cylindrical and is provided with an upper end for communication with the discharge tube 24 and a lower part for communication with a receiving tube 28. In use, the to allow material to flow therethrough.

In alternative embodiments, the flexible coupling 30 may be provided between any two processes in the material processing plant, for example between fixed processes, such as from hoppers into feeders, from hoppers into elevators, from feeders into mixers, from extruders into final pack off machines etc. The receiving tube 28 may be positioned substantially below or may be offset with respect to the discharge tube 24. It will be appreciated that the flexible coupling 30 may be provided at any outlet of the particulate material transfer assembly to duct material therethrough and provide a dust proof seal.

In alternative embodiments, the discharge tube and/or receiving tube may be in the form of different shaped inlets/outlets. For example, the tubes may be square, rectangular, oval, triangular or any suitable shape. It will be appreciated that that flexible coupling may have any suitable shape in cross section so as to substantially match the corresponding discharge and or receiving tube. It will be further appreciated that the discharge tube and receiving tubes may be substantially different shapes in cross section.

In the illustrated embodiment, a connection system 32 is provided proximate the discharge tube 24. The connection system 32 is provided to secure the flexible coupling 30 to the discharge tube 24 and is secured to the discharge tube 24 via a worm drive clamp 38. It will be appreciated that the connection system 32 may be secured to the discharge tube 24 by any other suitable method, e.g. a clasp arrangement, welding etc. or may be integrally formed with the transfer assembly. The connection system 32 is further provided with a connector mount 34 attached to the worm drive clamp 38 via a connector 50 and a releasable fastener 36 that is affixed to the connector mount 34. Provision of a worm drive clamp 38 as the connection means ensures that the connection system 32 can be fitted to outlets of different sizes, rather than requiring the connection system to be designed for each application.

In alternative embodiments, the container 14 may include an outlet that extends through the outlet 20 of the support 18 and the flexible coupling may be secured to the outlet 20. This configuration removes the need for cleaning the components such as the feeder tray and support during changeover of particulate matter, leaving only the flexible coupling 30 needing to be cleaned to prevent cross contamination between different processes.

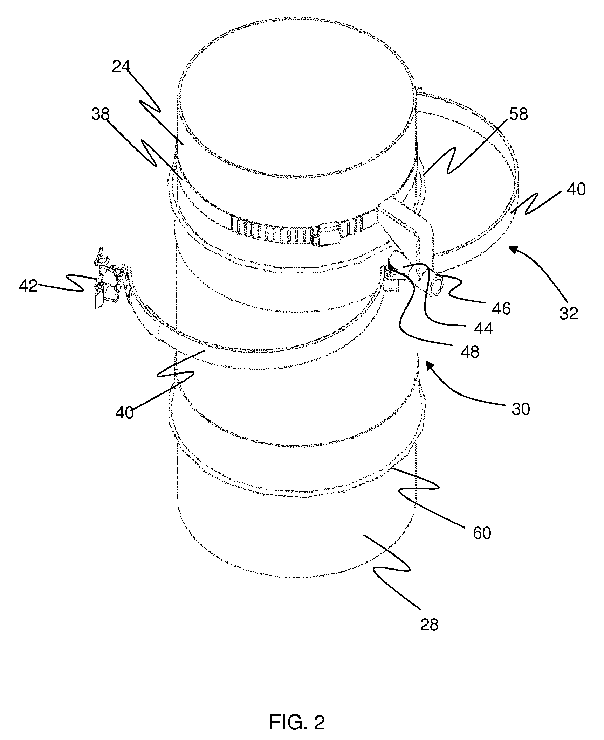

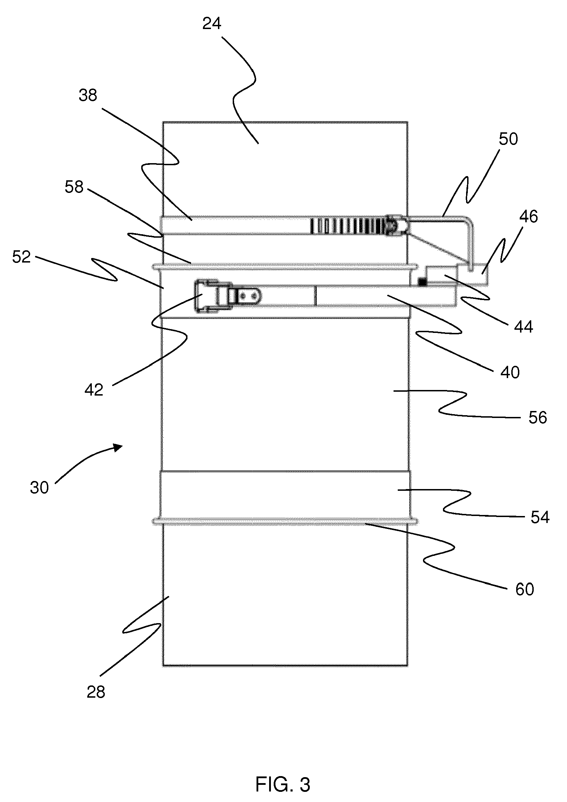

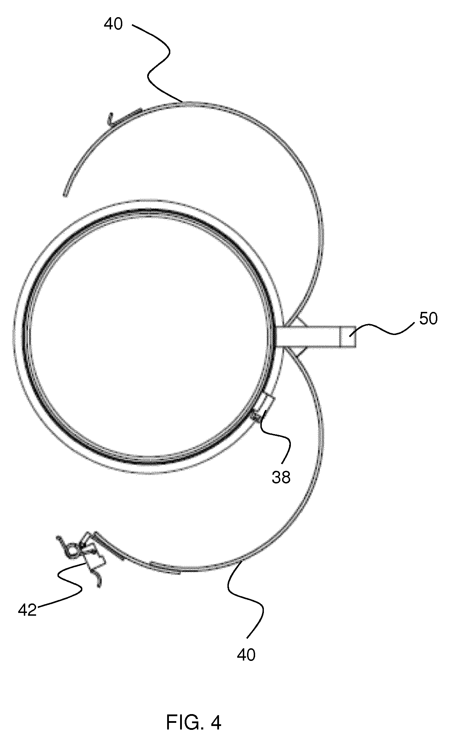

Referring to Figures 2 to 4, the flexible coupling 30 provided between a discharge tube 24 and receiving tube 28, and the connection system 32 are illustrated in more detail. The flexible coupling 30 is formed from three parts, an upper end part 52, a lower end part 54 and a central part 56 extending therebetween. The upper end part 52 is configured to be attached to the outlet of the discharge tube 24. That is, the outlet of the discharge tube 24 is inserted in the opening in the upper end part 52 of the flexible coupling 30.

The lower end part 54 is configured to be attached to the inlet of the receiving tube 28. That is, the inlet of the receiving tube 28 is inserted in the opening in the lower end part 54 of the flexible coupling 30.

The upper end part 52 and lower end part 54 are preferably made from an elastic material. In this embodiment latex is used but it will be appreciated that any suitable elastic material may be used. The central part 56 is formed from a flexible material which, in this embodiment, is polyurethane although any suitable flexible material can be used. The materials used for the central and end parts will be selected to suit the specific application/material to be transferred. Exemplary types of materials that could be used to produce the flexible coupling 30 are rubbers, coated fabrics, woven fabrics, polytetrafluoroethylene (PTFE) etc.

The flexible coupling 30 is also provided with an upper rim 58 and a lower rim 60 at the upper and lower distal ends of the coupling respectively. In this embodiment, the upper and lower rims 58, 60 are in the form of rings. The rings 58, 60 may be encased in the material of the upper and lower end parts 52, 54 respectively or may be secured to an external or internal surface thereof. As most clearly illustrated in Figure 2, these upper 58 and lower 60 rings are manufactured to have a larger width than the upper and lower end parts 52, 54 of the coupling 30. The rings 58, 60 are also configured to have a larger diameter than the lower and upper distal ends of the discharge tube 24 and receiving tube 28, respectively. That is, the inner diameter of the reinforced rings are configured to be larger than the outer diameter of the discharge tube 24 and/or the receiving tube 28.

In the illustrated embodiment, the rings 58, 60 have a slightly larger diameter than the tubes 24, 28 but the amount of difference in size can be varied to suit the application. This arrangement of the rings enables much quicker and easier fitting of the flexible coupling 30 over the tubes 24, 28. The rings 58, 60 are constructed from a stronger and stiffer material than the respective end parts 52, 54 and are not easily deformable, so as to maintain the shape of the flexible coupling 30 at its distal ends. Typical materials that could provide the required stiffness and rigidity that could be used for these reinforcing rings are plastics materials, ceramics, steel, or any suitable metal or alloy.

The upper 52 and lower 54 end parts are formed from an elastic material so as to provide a snug fit (or close-fit) when they are attached to the respective discharge tube 24 or receiving tube 28. This snug fit arrangement applies a compressive force from the elastic material against the tubes 24, 28 and enables the flexible coupling 30 to provide a dust tight seal around the tubes without the connection system 32. The central part 56 and end parts 52, 54 provided are narrower than the rings 58, 60 so as to improve the quality of the snug fit. This arrangement results in regions of the end parts 52, 54 proximate the rings 58, 60 to protrude away from the main plane of the respective tube 24, 28. This protrusion makes the flexible coupling 30 easy to handle and manoeuvre and further provides a surface to abut against the connection system 32 to, in use, prevent the coupling from accidental removal. The upper and lower end parts 52, 54 may also be narrower than the distal ends of the discharge and receiving tubes 24, 28 to further increase the quality of the dust seal provided. In an alternative embodiment, the rings 58, 60 may be configured to be a close fit with the tubes 24, 28 with the rings being thicker than the end parts 52, 54 so that the ring again provides a surface that can abut against the connection system 32.

The releasable fastener 36 includes two semi-circular metal rings 40 which are pivotally connected to the connector mount 34 at one side of the discharge tube 24 via a screw fastener 48. It will be appreciated that any alternative suitable fastener could be used. This pivot connection allows the rings 40 to pivot from an open configuration as illustrated in Figure 2 to a closed configuration (not shown) around the upper part 52 of the flexible coupling 30 when fitted around the discharge tube 24. The connection system 32 is secured to the discharge tube 24 via a worm drive clamp 38 as previously discussed, and the connector mount 34 is attached to the worm drive clamp 38 via connection member 50. In alternative embodiments, the connection system 32 may be secured to any other component of the transfer assembly proximate the discharge tube 24. The two rings 40 abut against each other at a side of the upper end part 52 of the flexible coupling opposing the connector mount 34 and are secured together by an over centre clamp 42. However, any other suitable clamping arrangements may be used to secure the two rings 40 together.

The connector mount 34 is of the form of a slideable mount which enables to the rings 40, at the connection point 48, to be moved towards and away from the flexible coupling 30. In this embodiment, the slideable mount 34 is in the form of a telescopic mount including a substantially cylindrical male part 44 and a substantially cylindrical female part 46 into which the male part is slideably engaged. This arrangement enables the releasable fastener 36 to be moved away from and towards the discharge tube 24 while attaching/detaching the flexible coupling 30 during a changeover process providing improved access to the flexible coupling 30. The male part 44 and female part 46 arrangement includes a detent arrangement (not shown), at maximum and minimum extension of the male part, to prevent the releasable fastener from accidentally moving while securing it to the discharge tube 24. In alternative arrangements, the connector mount 34 may further or alternatively include a pivot arrangement, for example between connector 50 and female part 46. This would enable the rings 40 to be adjusted from being substantially perpendicular with respect to the longitudinal axis of the discharge tube 24 to being substantially parallel to and offset from the longitudinal axis of the discharge tube 24 or any position therebetween in order to provide the operator with improved access for changing the flexible coupling 30.

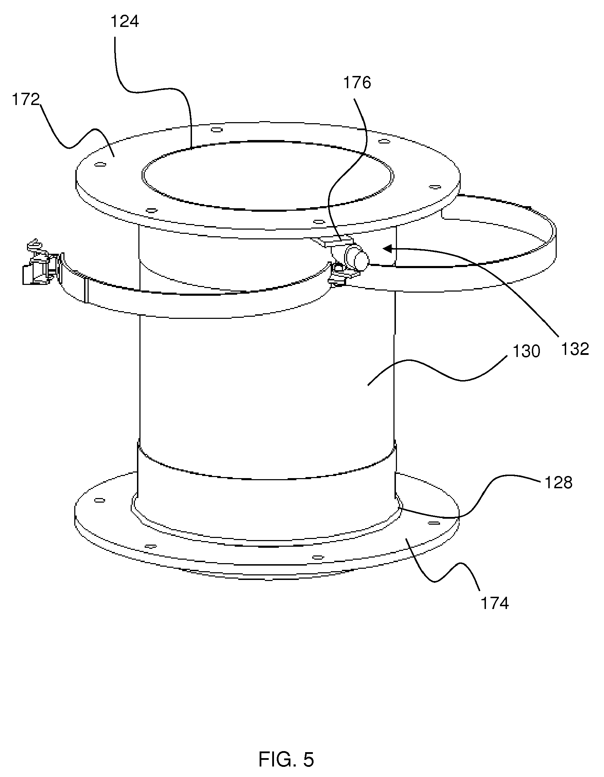

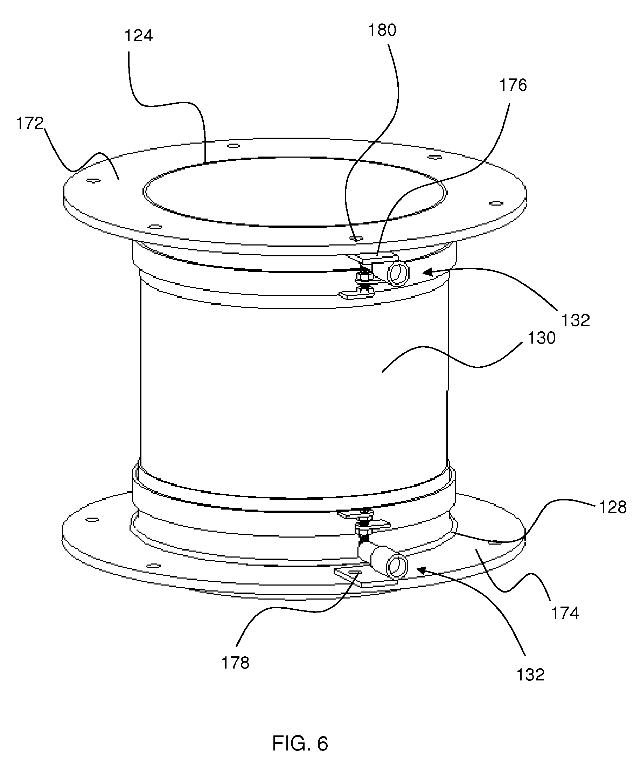

Referring to Figures 5 and 6, an alternative embodiment is illustrated, showing a flexible coupling 130 provided between a discharge tube 124 and a receiving tube 128 having a connection system 132. The system is similar to that described in relation to Figures 1 to 4. Corresponding components of the figures are labelled with the prefix "1" with respect to Figures 1 to 4, and only differences are discussed.

In this embodiment, the discharge tube 124 and the receiving tube 128 are provided with flanges 172, 174 respectively.

The connection system 132 is provided with a flat connection plate 176 located proximate to the slideable mount 134. In the illustrated embodiment, the connection plate 176 includes an aperture 178 therein. This aperture 178 is aligned with an aperture 180 in the flange 172, 174 to enable a fastener (not shown) to pass therethrough to connect the connection system 132 to the flange 172, 174 of the discharge tube 124 or receiving tube 128 respectively. In alternative arrangements, the connection system 132 may be secured to the tube 124 by any other suitable means such as welding, a clamp etc.

In alternative embodiments, even if the discharge tube and receiving tube are provided with flanges, the connection system may still be secured directly to the tube rather than to the flange. In alternative embodiments, it may be that only one of the discharge tube 124 and the receiving tube 128 are provided with a flange.

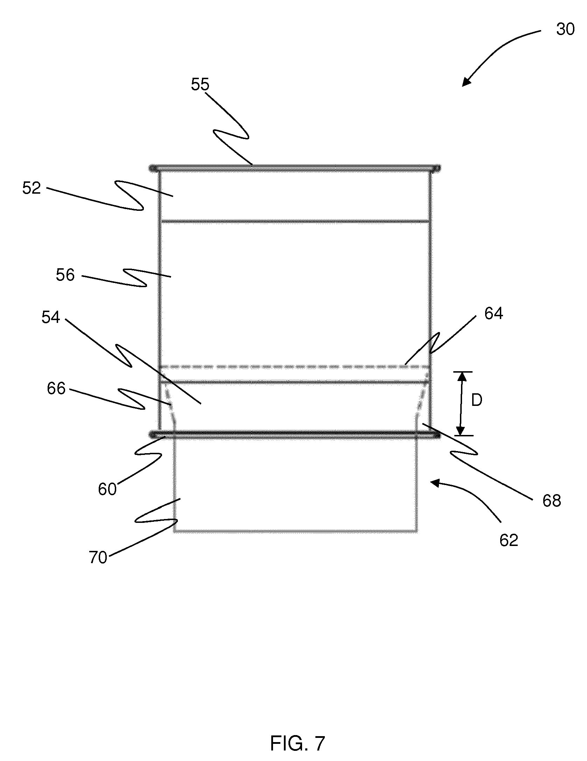

Referring to Figure 7, the flexible coupling 30 is illustrated in more detail. The upper end part 52 and lower end part 54 can each be seen to define roughly 20% of the total length of the flexible coupling 30. In alternative embodiments, the length of these parts may be adjusted to suit the specific application. The rings 58, 60 project outwards substantially horizontally (i.e. radially outwardly) from the outer surface of the distal ends of the upper 52 and lower 54 end parts, respectively.

The flexible coupling 30 is also provided with a flexible skirt 62 in the form of a cylindrical tube of flexible material. Typically, this is formed from the same material as the central part 56 of the coupling but could be any suitable material. It will be appreciated that the flexible skirt 62 will be substantially the same shape in cross section as the lower end part 54 of the flexible coupling 30 and/or as the receiving tube 28. In this embodiment, the skirt 62 is integrally formed with the flexible coupling 30 and extends downwards from the flexible coupling from a band 64 located in the central part 56 close to the upper extent of the lower end part 54. In alternative embodiments, the flexible skirt 62 may be produced separately and then permanently affixed to the flexible coupling, e.g. by heat sealing or bonding the flexible skirt such as via an adhesive. Alternatively, the flexible coupling may not include a flexible skirt.

A upper region 66 of the skirt 62 is tapered extending from the band 64, thus providing a main skirt section 70 that is narrower than the central part 56, upper end part 52 and lower end 54 parts of the flexible coupling 30 so as to provide a gap 68 between the lower part and the skirt. The flexible skirt 62 extends below the lower ring 60 and the length of this extension is configured to be longer than the distance D between the band 64 and the lower ring 60. In preferred embodiments, the flexible skirt 62 is at least 1.5 times the length of this distance D, or even more preferably at least 2 times the length. This extension is provided to ensure that the flexible skirt 62 is able to fold over the upper distal end of the receiving tube 28 when it is fitted.

With reference to the above figures, a method of fitting a flexible coupling 30 will now be described. If the releasable connection 36 is in a closed orientation, then the connection is first opened. If better access to the flexible coupling 30 is required then the releasable connection 36 is moved away from the discharge tube 24 by retracting the male part 42 into the female part 44, thus allowing the operator more space to fit the flexible coupling 30. The operator uses the ring 58 of the upper end part 52 to guide the flexible coupling over the outlet of the discharge tube 24. The elastic upper end part 52, which has a smaller width than the discharge tube 24, is stretched over the discharge tube 24 so as to create a snug fit seal. Provision of the larger opening at the ring enables quicker and easier fitting of the flexible coupling without comprising on the quality of the snug fit of the elastic part. This configuration allows for the easy fitting of the flexible coupling without the need for special machining of the discharge and receiving tubes as is required by some known flexible couplings.

The operator uses the ring 60 of the lower end part 54 to guide the flexible coupling 30 over the inlet of the receiving tube 28. While doing this, care is taken to ensure that the inlet of the receiving tube 28 is inserted into the gap 68. As the ring 60 is lowered onto the receiving tube 28 a snug fit dust proof connection is formed. When the upper extent of the receiving tube 28 contacts the flexible skirt 62 at the band 64, the skirt 62 begins to be raised and folds over the receiving tube 28. This folding of the flexible skirt 62 results in the formation of a gap between the flexible skirt and the central part 56 of the coupling 30 proximate the upper extent of the receiving tube 28. During the dispensing/transfer of particulate material, this gap becomes filled with material. This exerts a force on the lower end part 54 and the receiving tube 28 through the skirt 62, and results in an improved dust proof seal and hence improves the overall performance of the flexible coupling 30.

Following fitting of the flexible coupling 30 to the tubes 24, 28 the releasable fastener 36 is moved closer to the discharge tube 24. The bars 40 are then moved around the discharge tube 24 at a point proximate to and slightly below the ring 58 of the upper end part 52. The bars 40 are then secured together via the over centre clasp 42 to provide a secured attachment of the flexible coupling 30 to the discharge tube 24.

Although the invention has been described above with reference to one or more preferred embodiments, it will be appreciated that various changes or modifications may be made without departing from the scope of the invention as defined in the appended claims.

It will be appreciated that a second connection system, including all of the corresponding features of the connection system herein described, may be provided proximate the inlet of the receiving tube. This may be required when the material being transferred applies an outwards axial pressure to the flexible coupling, which could result in the lower end of the coupling being lifted off the receiving tube.

## Claims

1. A particulate material transfer assembly comprising:
a discharge tube;
a receiving tube;
a flexible coupling provided between the discharge tube and the receiving tube, the flexible coupling comprising an upper end part for communication with the discharge tube and a lower end part for communication with the receiving tube; and
a connection system, the connection system comprising a first connector mount located proximate an outlet of the discharge tube; and a releasable fastener secured to the first connector mount and configured to, in use, extend around a perimeter of the upper end part of the flexible coupling when the upper end part of the flexible coupling is attached to the outlet of the discharge tube to releasably secure the upper end part of the flexible coupling to the discharge tube.

2. The assembly according to claim 1, wherein the first connector mount is secured to the discharge tube.

3. The assembly according to claim 2, wherein the first connector mount is permanently secured to the discharge tube (e.g. it is welded to the discharge tube), or releasably secured to the discharge tube (e.g. via a worm drive clamp).

4. The assembly according to any preceding claim, wherein the connector mount comprises a slideable mounting arrangement, optionally via a telescopic mount.

5. The assembly according to any preceding claim, wherein the releasable fastener is pivotally secured to the connector mount.

6. The assembly according to any preceding claim, wherein the releasable fastener comprises an over centre clamp.

7. The assembly according to any preceding claim, wherein the flexible coupling comprises a central part of flexible material, optionally polyurethane, extending between the upper and lower end parts.

8. The assembly according to any preceding claim, wherein the upper and lower end parts comprise an elastic material, optionally latex.

9. The assembly according to claim 8, wherein the elastic material of each of the upper and lower end parts are configured to have a smaller diameter than the discharge tube and/or receiving tube, respectively.

10. The assembly according to any preceding claim, wherein the upper and lower end parts each comprise a reinforced ring at distal ends of the flexible coupling.

11. The assembly according to claim 10, wherein an inner diameter of the reinforced rings is larger than an outer diameter of the discharge tube and/or receiving tube, e.g. to produce a flare in the flexible connection.

12. The assembly according to any preceding claim, wherein the flexible coupling further comprises a flexible skirt extending below a lower extent of the lower end part, configured to, in use, fold over and into the receiving tube.

13. The assembly according to any preceding claim, further comprising a second connector mount proximate an inlet of the receiving tube, and a releasable fastener secured to the second connector mount, configured to, in use, extend around a perimeter of the lower end part of the flexible coupling when the lower end part of the flexible coupling is attached to the inlet of the receiving tube to releasably secure the lower end of the flexible coupling to the receiving tube.

14. A connection system for a particulate material transfer assembly comprising: a first ring fastener configured to be secured to an outlet of a particulate material transfer assembly; a releasable fastener in the form of an elongate member with a releasable clasp, the releasable fastener configured to extend around a perimeter of an outlet of a particulate material transfer assembly; a connection member connected to the first ring fastener and comprising a slideable connection mount, wherein the releasable fastener parallel to and offset from the first ring fastener and is slideably secured to the connection mount.

15. A flexible coupling for a particulate material transfer assembly comprising: an upper end part for communication with an outlet of a particulate material transfer assembly; a lower end part for communication with an inlet of a particulate material transfer assembly; a central part extending between the upper and lower end parts; reinforced rings located at distal ends of the upper and lower end parts; and a flexible skirt extending below a lowermost extent of the lower end part and configured, in use, to fold over and into an inlet of a particulate material transfer assembly.
